# DEMANDE DE BREVET EUROPEEN

(11) **EP 2 020 429 A1**
(43) Date de publication de la demande: **04.02.2009**
(21) Numéro de dépôt: 08161343.2
(22) Date de dépôt: 29.07.2008
(51) Int. Cl.: C08L 27/06, C08K 5/13, C08K 5/092, C08L 97/02, C08L 1/00, C08K 9/04

(54) **Composite a base de pvc et de fibres vegetales**

(30) Priorité: 31.07.2007 FR 0756830
(71) Demandeur: Lapeyre, 92400 Courbevoie (FR)
(72) Inventeur: Augier, Laurent, 31520 RAMONVILLE SAINT AGNE (FR); Vaca-Garcia, Carlos, 31400 TOULOUSE (FR); Gay, Thierry, 71250 CLUNY (FR)
(74) Mandataire: Lucas, Francois

(57) **Abrégé**

L'invention se rapporte à un composite comprenant un matériau polymère du type PVC (polychlorure de vinyle), des fibres végétales, notamment du type ligno-cellulosique ou cellulosique et un agent promoteur de la liaison entre le polymère et lesdites fibres, caractérisé en ce l'agent promoteur est choisi parmi les polyphénols et les acides carboxyliques comprenant un groupement phénol.

## Description

L'invention se rapporte au domaine des composites comprenant un matériau polymère du type PVC (polychlorure de vinyle) et des fibres végétales, du type ligno-cellulosique ou cellulosique.

Les composites à base de PVC sont actuellement utilisés dans l'industrie du bâtiment et autres. Par exemple, les composites PVC/Bois peuvent notamment être utilisés pour les parties extérieures non structurelles ou structurelles des bâtiments : cadres de fenêtres, volets, portes, portail... En particulier, les fibres végétales sont appréciées pour leurs capacités renforçantes, isolantes, aussi bien thermiques que phoniques. Associées à une matrice plastique, ces fibres fournissent une alternative écologique pour certaines pièces plastiques ou métalliques des bâtiments. De tels procédés répondent au concept d'éco-conception, en particulier en permettant une valorisation des résidus et déchets de bois et de polymères et en proposant une alternative à l'utilisation unique d'un polymère issu des ressources fossiles.

D'autres applications sont également possibles et déjà largement diffusées : l'utilisation de fibres végétales en tant que renfort d'une matrice plastique est ainsi une pratique devenue courante notamment en Amérique du Nord, le principal marché étant le platelage ou decking selon le terme anglais. En Europe, le secteur automobile développe et conçoit de nouveaux véhicules qui intègrent une part croissante de ces matériaux car ils offrent un gain technique et environnemental conséquent par rapport aux matériaux composites classiques à base de fibres de verre.

Cependant, une utilisation large de tels composites et un développement à encore plus grande échelle n'est envisageable que si ceux-ci présentent des propriétés mécaniques, notamment de rigidité, de résistance aux charges et aux impacts suffisantes pour permettre de telles applications.

En outre, les composites doivent présenter une tenue acceptable au cours du temps pour ce qui concerne la résistance aux agressions climatiques, notamment en exposition extérieure.

La présente invention se rapporte à des composites à base de PVC et de fibres végétales présentant de telles propriétés. Par fibres végétales, on entend au sens de la présente description des fibres du type ligno-cellulosique ou cellulosique. Plus particulièrement les fibres végétales préférées selon l'invention sont les fibres de bois. Dans la suite de la description on désignera de tels composites sous le terme générique « composites PVC/bois», bien que l'invention ne soit bien évidemment pas limitée à des fibres de bois.

De tels composites PVC/bois ont déjà été très étudiés dans la littérature. Il est notamment connu que les propriétés mécaniques de ces matériaux ne sont pas satisfaisantes, en raison de la faible compatibilité entre les fibres végétales et la matrice thermoplastique. Cette incompatibilité se traduit par une faible adhésion entre le polymère et les fibres à leur interface et par suite à des propriétés mécaniques diminuées du composite, notamment par rapport aux propriétés mécaniques initiales à la fois du polymère et des fibres de bois, ainsi qu'à sa dégradation rapide, notamment si celui-ci est disposé en extérieur.

Pour résoudre de tels problèmes, il a été proposé différentes solutions incorporant l'utilisation d'agents chimiques permettant notamment d'améliorer la compatibilité des deux composants. Ces systèmes sont par exemple des silanes, des isocyanates, des copolymères du PVC, ou encore des résines urée/formaldéhyde ou des hydrocarbures chlorés. Dans la suite de la description on désignera de tels systèmes par le terme « agent promoteur de la liaison » ou encore « agent promoteur ». La plupart de ces agents sont cependant soit coûteux, soit difficile à mettre en oeuvre, soit encore nécessite un traitement supplémentaire d'imprégnation de la fibre végétale avant son mélange avec le composite, qui complexifie et augmente sensiblement le coût global du procédé. En outre, il a été décrit dans la littérature, notamment dans la demande WO 2007/050324, que l'utilisation de tels agents ne permettait cependant pas d'améliorer significativement le module élastique de ces composites, ce qui diminue fortement leur intérêt commercial, notamment lorsque des proportions importantes de fibres, par exemple supérieures à 40% en poids, sont utilisées dans le composite.

Plus récemment il a été proposé, dans la demande WO2006/060223, l'utilisation comme agent promoteur d'adhésion d'un polymère ou d'un copolymère d'un sel d'un acide carboxylique dont le groupement carboné est du type éthylénique. Le processus de traitement des fibres décrit dans la demande nécessite une étape préliminaire de traitement consistant en une imprégnation des fibres dans une solution aqueuse du polymère acide. Les résultats reportés montrent cependant qu'une amélioration des propriétés mécaniques, notamment de contrainte à la rupture, n'est pas systématiquement obtenue par l'utilisation de tels agents.

Plus précisément, la présente invention a pour objet un composite PVC/fibres végétales dont la cohésion entre les deux constituants est améliorée, c'est-à-dire dont les propriétés mécaniques (module élastique et contrainte maximale supportable) sont améliorées. Le composite selon l'invention présente en outre une tenue mécanique, après un vieillissement dû aux agressions climatiques, très sensiblement améliorée par rapport aux composites PVC/bois déjà décrits.

Dans sa forme la plus générale, la présente invention se rapporte à un composite comprenant un matériau polymère du type PVC (polychlorure de vinyle), des fibres végétales, notamment du type ligno-cellulosique ou cellulosique et un agent promoteur de la liaison entre le polymère et lesdites fibres, caractérisé en ce l'agent promoteur est choisi parmi les polyphénols et les acides carboxyliques comprenant un groupement phénol.

De préférence, le poids moléculaire de l'agent promoteur est inférieur à 2000 et de préférence inférieur à 1000, voire inférieur à 500.

Le composite selon l'invention peut notamment comprendre un ou plusieurs noyaux aromatiques, un ou plusieurs groupement(s) hydroxyle(s) étant positionné(s) sur le ou les noyau(x) aromatique(s) et éventuellement une ou plusieurs fonction(s) acide(s) carboxylique(s).

Selon un mode possible de réalisation de l'invention, l'agent promoteur est un polyphénol comprenant au moins deux cycles aromatiques dont l'un au moins comprend au moins un groupement hydroxyle. On peut notamment citer parmi ce type d'agent promoteur l'apigénine, l'acide ellagique ou encore l'épicatéchine ou l'épigallocatéchine.

Selon un autre mode possible de réalisation de l'invention, l'agent promoteur comprend au moins une fonction acide carboxylique et au moins un groupement polyphénol.

De préférence, dans un tel agent promoteur, un groupement phénolique est en position para par rapport à un groupement acide carboxylique.

Par exemple, l'acide carboxylique comprenant un groupement phénol est choisi dans le groupe constitué par l'acide gallique, l'acide coumarique, l'acide férulique, l'acide synaptique, les acides dihydroxybenzoïques, l'acide caféique et leurs dérivés.

Selon un mode préféré, l'agent promoteur est l'acide gallique.

Les fibres végétales selon l'invention sont typiquement choisies parmi les fibres ligno-cellulosiques ou cellulosiques et de préférence parmi les fibres ligno-cellulosiques.

En particulier, les fibres végétales préférées selon l'invention sont des fibres issues d'un bois résineux.

En général, le pourcentage massique de l'agent promoteur est compris entre 0,05 et 10% de la masse totale du composite, de préférence entre 0,1 et 5% et de manière très préférée entre 0,2 et 2% de la masse totale du composite.

Le pourcentage massique de fibres végétales peut être compris entre 20 et 80% de la masse totale du composite et de préférence peut être compris entre 30 et 60% de la masse totale du composite.

L'invention se rapporte également à un procédé d'obtention d'un composite selon l'une des revendications précédentes, dans lequel on mélange la matière plastique et l'agent promoteur avec les fibres végétales puis on extrude ou on injecte à une température comprise entre 150 et 200°C un profilé ou un granulat dudit composite.

Selon un autre aspect, la présente invention se rapporte à l'utilisation de polyphénols ou d'acides carboxyliques comprenant un groupement phénol comme agent promoteur de la liaison entre un polymère PVC et des fibres végétales. Typiquement, selon cette utilisation, l'agent promoteur est un acide tel que précédemment décrit.

Au sens de la présente invention, on désigne par PVC à la fois les homopolymères et les copolymères du chlorure de vinyle, c'est-à-dire toute matière plastique contenant des unités de chlorure de vinyle dans sa structure, par exemple les copolymères de chlorure de vinyle avec les esters des acides acryliques et méthacryliques ou avec l'acrylonitrile, les copolymères de chlorure de vinyle avec les composés dièniques et les acides dicarboxyliques insaturés ou leurs anhydrides, les copolymères de chlorure de vinyle et de polymères post chlorés ou d'aldéhydes insaturés, de cétones ou autres comme les acroléines, les crotonaldéhydes, les vinylméthylcétones les vinylméthylethers, les vinylisobutylethers.

Le terme PVC est également utilisé dans la présente description pour désigner les polymères greffés de PVC avec les EVA (éthylène vinyl acétate) les ABS (acrylonitrile-butadiène-styrène) et les MBS (méthylmethacrylate-butadiene-styrène). Des polymères possibles peuvent en particulier être constitués de mélanges entre les homopolymères de chlorure de vinyle et les copolymères précédemment mentionnés avec d'autres polymères du type thermoplastique et/ou élastomère, en particulier les mélanges avec les EVA, ABS, MBS, SAN (styrène acrylonitrile), PMMA (polyméthacrylate de méthyle) EPDM (Ethylène propylène diène monomère), CPE (plyéthylène chloré), MBAS, PMA (polyméthyl acrylate) et les polylactones.

Les avantages de la présente invention sont illustrés par les exemples qui suivent. Ces exemples sont fournis uniquement dans le but de permettre une meilleure compréhension de certains modes de réalisation de l'invention, étant entendu qu'ils ne sont en aucune façon limitatifs en ce qui concerne l'étendue de la présente invention, sous aucun des aspects décrits par la suite.

Dans une première série d'exemples 1 à 4, les propriétés mécaniques d'un composite PVC/bois (exemple 4) selon l'invention, dans lequel l'acide gallique (noté AG dans les tableaux qui suivent) est utilisé comme agent promoteur de la liaison, ont été mesurées et comparées à celles d'un composite PVC/bois sans l'acide gallique (exemple 3) et à celles de la matrice PVC seule avec ou sans l'agent promoteur (exemples 1 et 2).

Le tableau 1 qui suit indique les différents constituants utilisés pour chacun des essais, ainsi que leurs proportions. Dans la présente demande, tous les pourcentages sont massiques.

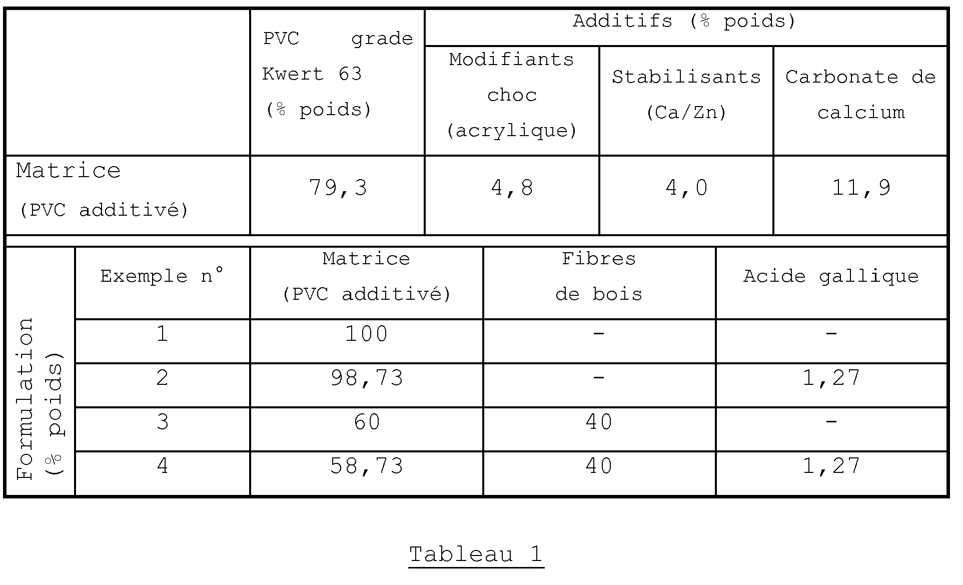

Les fibres de bois sont des fibres de bois résineux dont l'humidité résiduelle est inférieure à 1% et dont la granulométrie moyenne est comprise entre 180 et 355 microns. Les additifs utilisés sont des modifiants choc de type acrylique, des stabilisants à base de Ca/Zn et du carbonate de calcium.
L'acide gallique utilisé (acide 3,4,5-trihydroxybenzoïque selon la nomenclature internationale) est un polyphénol commercialisé par la société Sigma Aldrich (référence CAS : 149-91-7). Sa formule développée est donnée ci-après :

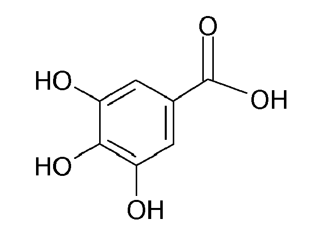

L'acide gallique est majoritairement utilisé à l'heure actuelle pour ses propriétés anti-oxydantes dans l'industrie agroalimentaire ainsi que dans l'industrie cosmétique.

A température ambiante, l'acide gallique se présente sous la forme d'une poudre. Sa température de fusion est égale à 251°C mais ce composé se dégrade à 231°C. Toutefois, ceci facilite notamment son utilisation aux températures de mise en forme des composites PVC/fibres végétales par les procédés classiques d'extrusion ou d'injection.

Le principe général de fabrication des composites PVC/fibres de bois est le suivant :

Le PVC et les additifs sont d'abord mélangés à haute vitesse jusqu'à atteindre une température supérieure à 100°C. Dans les exemples, le mélange du PVC et de ses additifs a été effectué à une vitesse en bout de pale de 38 m.s⁻¹. Le mélange a été stoppé, après 8-9 minutes environ, dès que la température du mélange a atteint 110°C. Le mélange est ensuite immédiatement refroidi dans un deuxième mélangeur à plus basse vitesse et à une température de 20°C. Le mélange obtenu, appelé matrice, correspond à un PVC additivé. Les additifs utilisés répertoriés dans le tableau 1 sont des stabilisants bien connus pour faciliter la mise en forme de la matrice PVC. Bien entendu, les additifs utilisés dans les présents exemples pourront être remplacés par tout autre système ou composé ou mélange de composés connus à cet effet, sans sortir du cadre de la présente invention.

Selon l'exemple 1 (matrice seule), la matrice PVC est directement extrudée sous forme de granulats.

Selon l'exemple 2 (matrice seule avec acide gallique) l'acide gallique est incorporé à la matrice PVC additivitée dans le mélangeur à basse vitesse avant l'extrusion.

Selon l'exemple 3, les fibres de bois, préalablement séchées à 100°C jusqu'à atteindre un taux d'humidité résiduelle inférieur à 1%, sont incorporées à la matrice PVC additivée dans le mélangeur à basse vitesse pour obtenir une composition crue correspondant sensiblement à la formulation finale du composite. Cette composition est ensuite directement extrudée en granulats.

Selon l'exemple 4, les fibres de bois, avec un taux d'humidité résiduelle inférieur à 1%, sont incorporées, en mélange avec l'acide gallique, à la matrice PVC additivée dans le mélangeur à basse vitesse pour obtenir une composition crue correspondant sensiblement à la formulation finale du composite. La composition est ensuite directement extrudée en granulats.

L'extrudeuse utilisée est une extrudeuse monovis de référence HAAKE Polylab Rheomex 252p, de diamètre extérieur égal à 18,9 mm (25D) et dont le facteur de compression est de 2:1., sur laquelle a été montée une filière capillaire de 3 mm de diamètre et de rapport longueur/diamètre = 5.

Les extrusions ont été mises en oeuvre à des vitesses de vis comprises entre 50 et 80 tr.min⁻¹. Les températures de matière fondue en sortie d'extrudeuse sont de l'ordre de 191 à 197°C. La pression au niveau de la filière est comprise entre 120 et 190 bars (1 bar = 0,1 MPa).

Les extrudats de 3 mm de diamètre ont ensuite été broyés à l'aide d'un broyeur à couteaux équipé d'un tamis de 2 mm de diamètre. Les granulés fins obtenus ont été directement injectés dans un moule permettant d'obtenir des éprouvettes de dimensions normalisées pour les tests mécaniques de flexion trois points.

La presse à injecter utilisée est un appareil de référence FANUC ROBOSHOT S-2000i 100A dont la vis présente un diamètre extérieur égal à 25,9 mm et un taux de compression de 1,8:1.

Le moule est régulé à une température comprise entre 40 et 80°C par un circuit d'eau. La pression d'injection est comprise entre 1500 et 2000 bars et la vitesse d'injection de l'ordre de 30 mm.s⁻¹.

Au final, on obtient 4 séries d'éprouvettes, de dimensions 80 × 10 × 4 (longueur × largeur × épaisseur en mm) et correspondant respectivement aux échantillons des exemples 1 à 4.

Des tests de flexion 3 points ont été réalisés sur une population de 6 éprouvettes pour chaque exemple à l'aide d'une machine de référence TINIUS OLSEN H5KT selon les conditions décrites dans la norme ISO 178 pour la détermination des propriétés en flexion des plastiques. Le tableau 2 résume pour les formulations des exemples 1 à 4 les propriétés mécaniques obtenues :

**Tableau 2**

| Propriétés | Exemple 1 (matrice seule) | Exemple 2 (matrice + AG) | Exemple 3 (composite seul) | Exemple 4 (composite + AG) |
|---|---|---|---|---|
| Module élastique (GPa) | 3, 0 ± 0, 1 | 3,0 ± 0,1 | 5,9 ± 0,2 | 6,3 ± 0,1 |
| Contrainte maximale (MPa) | 73, 0 ± 0, 6 | 72,7 ± 0,5 | 55,6 ± 0,9 | 79,4 ± 0,8 |
| Déformation à la rupture (%) | Pas de rupture | Pas de rupture | 1,6 ± 0,1 | 1,5 ± 0,1 |

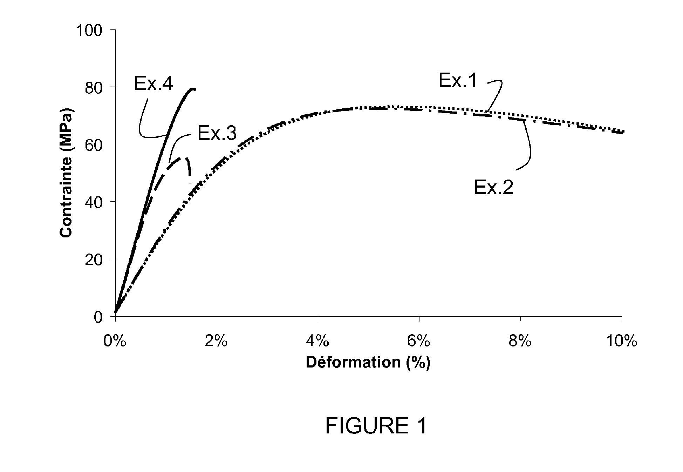

L'absence de valeurs dans le tableau 2 pour la déformation à la rupture des exemples 1 et 2 indique que les éprouvettes n'ont pas cassé. Les courbes de flexion 3 points des quatre formulations des exemples 1 à 4 sont reportées sur la figure 1.
On observe ainsi que l'addition de 40% de fibres de résineux dans la matrice PVC permet de doubler le module élastique mais a pour contrepartie une chute rédhibitoire pour les applications potentielles de 25% de la contrainte maximale en raison d'une mauvaise adhésion à l'interface fibre/matrice. On observe par comparaison des valeurs obtenues pour les exemples 1, 3 et 4 que l'ajout d'acide gallique permet non seulement d'augmenter encore d'un facteur de 10% environ la valeur du module élastique (6,3 GPa) du composite obtenu mais permet également de supprimer la chute conjointe de la valeur de la contrainte maximale. La comparaison des exemples 3 et 4 montre ainsi que l'ajout de l'acide gallique permet une augmentation de plus de 40% de la contrainte maximale ce qui n'avait jamais été observé jusqu'à présent. L'augmentation est telle que la valeur de la contrainte maximale ainsi obtenue est même sensiblement plus élevée que celle de la matrice PVC seule.

Dans une deuxième série d'exemples 5 à 8, afin d'estimer la durabilité des composites selon l'invention, on a cherché à mesurer les propriétés de vieillissement du composite PVC/bois selon l'invention (exemple 8), par comparaison à celles d'un composite PVC/bois sans l'agent promoteur de la liaison (exemple 6 et 7) et à celles de la matrice PVC seule (exemple 5).
Le tableau 3 qui suit indique les différents constituants utilisés pour chacun des essais, ainsi que leurs proportions, en pourcentage massique.

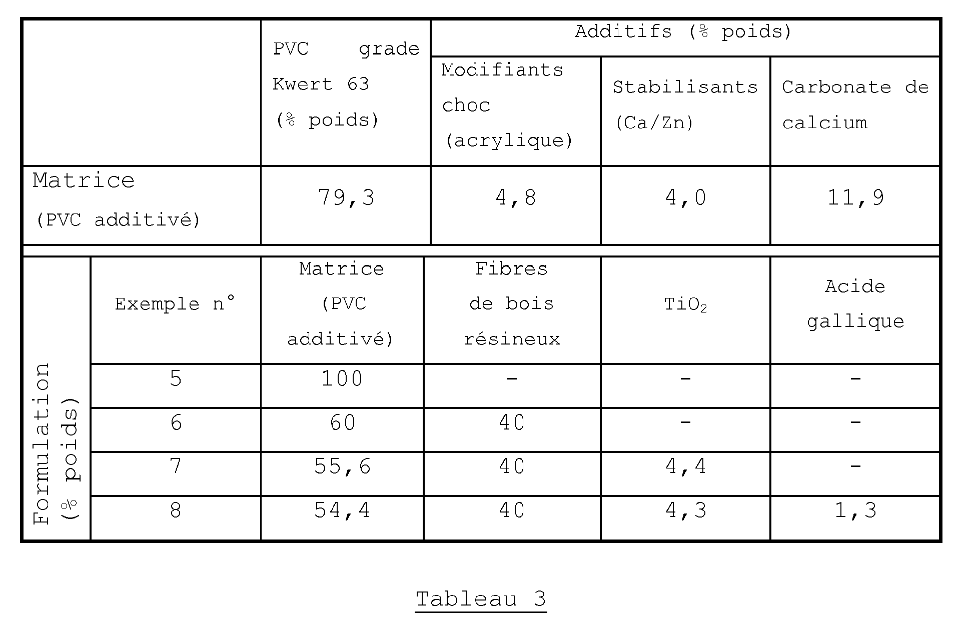

La matrice, les fibres et l'agent promoteur sont identiques à ceux déjà décrits en relation avec les exemples 1 à 4.
Le principe général de fabrication des composites PVC/bois est différent de celui décrit précédemment en relation avec les exemples 1 à 4 et est représentatif d'un procédé industriel. Les composites ont été réalisés à l'aide d'une extrudeuse semi-industrielle CINCINATTI FIBEREX T58. L'extrudeuse est munie de deux vis coniques de diamètre min/max 58/124 mm et de longueur 1185 mm. Elle dispose également d'une zone de dégazage permettant d'évacuer l'humidité résiduelle des fibres de bois.
La matrice PVC a été réalisée dans les mêmes conditions que les exemples 1 à 4.
Les fibres de bois ont été utilisées avec une humidité relative comprise entre 4 et 6%.
Le PVC additivé et les fibres de bois ont été introduits dans l'extrudeuse sans mélange préalable.
Les différentes formulations présentées dans le Tableau 3 ont été extrudées sous forme de profilés creux dans lesquels ont été découpées des éprouvettes de dimensions calibrées 85 × 19 × 5 (longueur × largeur × épaisseur en mm), pour les tests en flexion trois points.

Une première série d'éprouvettes est testée directement en flexion trois points, selon un protocole expérimental identique à celui précédemment décrit, une seconde série est préalablement soumise à un protocole de vieillissement accéléré avant les tests de flexion. Le test de vieillissement accéléré est mis en oeuvre selon les conditions décrites dans la norme ISO 4892-1.

Pour chaque formulation, cinq éprouvettes ont subi 1500h de vieillissement climatique accéléré. De façon connue, une telle durée correspond, dans le cas d'un PVC rigide sans fibres végétales, à un vieillissement naturel dans le sud de la France de deux ans environ.
Les conditions du vieillissement sont les suivantes :
- la température est de 50°C,
- les échantillons sont exposés en continu à des cycles de trois heures : deux heures d'exposition aux rayons UV puis une heure d'immersion dans l'eau à l'abri de la lumière et ainsi de suite.
Les principaux résultats obtenus sont reportés dans le tableau 4 :

**Tableau 4**

| Propriétés avant et après vieillissement | | Exemple 5 (matrice seule) | Exemple 6 (composite) | Exemple 7 (composite + TiO₂) | Exemple 8 (composite + TiO₂ + AG) |
|---|---|---|---|---|---|
| Module élastique (GPa) | 0h | 2,6 ± 0,2 | 4,1 ± 0,3 | 4,1 ± 0,3 | 5, 0 ± 0,6 |
| | 1500h | 2,6 ± 0,2 | 2,7 ± 0,2 | 2,5 ± 0,2 | 4,2 ± 0,5 |
| Contrainte (MPa) | 0h | 70,4 ± 2,0 | 43,1 ± 1,0 | 42,3 ± 0,7 | 70,5 ± 3,0 |
| | 1500h | 69,3 ± 0,5 | 38,1 ± 0,7 | 38,3 ± 1,0 | 60,9 ± 2,0 |
| Déformation à la rupture (%) | 0h | Pas de rupture | 1,7 ± 0,1 | 1,4 ± 0,1 | 1,5 ± 0,2 |
| | 1500h | Pas de rupture | 2,0 ± 0,2 | 1,8 ± 0,2 | 1,5 ± 0,2 |

La comparaison des données reportées dans le tableau 4 montre que l'ajout d'un acide selon l'invention dans la formulation du composite permet d'augmenter très significativement les propriétés mécaniques du composite, que ce soit avant ou après vieillissement climatique accéléré.

## Revendications

1. Composite comprenant un matériau polymère du type PVC (polychlorure de vinyle), des fibres végétales, notamment du type ligno-cellulosique ou cellulosique et un agent promoteur de la liaison entre le polymère et lesdites fibres, **caractérisé en ce** l'agent promoteur est choisi parmi les polyphénols et les acides carboxyliques comprenant un groupement phénol.

2. Composite selon la revendication 1, dans lequel le poids moléculaire de l'agent promoteur est inférieur à 2000 et de préférence inférieur à 1000.

3. Composite selon l'une des revendications précédentes, dans lequel l'agent promoteur comprend un ou plusieurs noyaux aromatiques, un ou plusieurs groupements hydroxyle(s) étant positionné(s) sur le ou les noyau(x) aromatique(s) et éventuellement une ou plusieurs fonction(s) acide(s) carboxylique(s).

4. Composite selon l'une des revendications précédentes, dans lequel l'agent promoteur est un polyphénol comprenant au moins deux cycles aromatiques dont l'un au moins comprend au moins un groupement hydroxyle.

5. Composite selon l'une des revendications précédentes, dans lequel l'agent promoteur comprend au moins une fonction acide carboxylique et au moins un groupement polyphénol.

6. Composite selon la revendication 5, dans lequel au moins un groupement phénolique est en position para par rapport au groupement acide carboxylique.

7. Composite selon l'une des revendications précédentes, dans lequel l'agent promoteur est choisi dans le groupe constitué par l'acide gallique, l'acide coumarique, l'acide férulique, l'acide synaptique, les acides dihydroxybenzoïques, l'acide caféique et leurs dérivés.

8. Composite selon l'une des revendications précédentes, dans lequel l'agent promoteur est l'acide gallique.

9. Composite selon l'une des revendications précédentes, dans lequel les fibres végétales sont choisies parmi les fibres ligno-cellulosiques ou cellulosiques.

10. Composite selon l'une des revendications précédentes, dans lequel les fibres végétales sont des fibres issues d'un bois résineux.

11. Composite selon l'une des revendications précédentes, dans lequel le pourcentage massique de l'agent promoteur est compris entre 0,05 et 10% de la masse totale du composite, de préférence entre 0,1 et 5% et de manière très préférée entre 0,2 et 2% de la masse totale du composite.

12. Composite selon l'une des revendications précédentes, dans lequel le pourcentage massique de fibres végétales est compris entre 20 et 80% de la masse totale du composite, de préférence entre 30 et 60% de la masse totale du composite.

13. Procédé d'obtention d'un composite selon l'une des revendications précédentes, dans lequel on mélange la matière plastique et l'agent promoteur avec les fibres végétales puis on extrude ou on injecte à une température comprise entre 150 et 200°C un profilé ou un granulat dudit composite.

14. Utilisation de polyphénols ou d'acides carboxyliques comprenant un groupement phénol comme agent promoteur de la liaison entre un polymère PVC et des fibres végétales.

15. Utilisation selon la revendication 14, dans lequel le polyphénol ou l'acide carboxylique comprenant un groupement phénol est un composé tel que décrit dans l'une des revendications 1 à 8.
